(19) Europäisches Patentamt European Patent Office Office européen des brevets

(11) **EP 3 891 930 B1**

(12) **EUROPEAN PATENT SPECIFICATION**

(45) Date of publication and mention
of the grant of the patent:
**05.02.2025 Bulletin 2025/06**

(21) Application number: **18815627.7**

(22) Date of filing: **05.12.2018**

(51) International Patent Classification (IPC):
**G06Q 10/0631** *(2023.01)*   **H04L 41/147** *(2022.01)*
**H04L 41/149** *(2022.01)*   **G06Q 50/60** *(2024.01)*

(52) Cooperative Patent Classification (CPC):
**G06Q 10/06311; G06Q 10/063112; G06Q 50/60;
H04L 41/147; H04L 41/149**

(86) International application number:
**PCT/EP2018/083582**

(87) International publication number:
**WO 2020/114584 (11.06.2020 Gazette 2020/24)**

(54) **METHOD AND TECHNICIAN ALLOCATING SYSTEM FOR ALLOCATING A FIELD TECHNICIAN**

VERFAHREN UND TECHNIKERZUWEISUNGSSYSTEM ZUR ZUWEISUNG EINES
FELDTECHNIKERS

PROCÉDÉ ET SYSTÈME D'AFFECTATION DE TECHNICIEN PERMETTANT D'AFFECTER UN
TECHNICIEN DE TERRAIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.10.2021 Bulletin 2021/41**

(73) Proprietor: **TELEFONAKTIEBOLAGET LM
ERICSSON (PUBL)**
**164 83 Stockholm (SE)**

(72) Inventors:
• **INAM, Rafia**
**724 70 Västerås (SE)**
• **SUN, Bin**
**977 53 Luleå (SE)**
• **NIEMOELLER, Joerg**
**172 41 Sundbyberg (SE)**
• **LINDSTRÖM, Daniel**
**974 38 Luleå (SE)**
• **VULGARAKIS FELJAN, Aneta**
**112 18 Stockholm (SE)**
• **JIN, Yifei**
**171 69 Solna (SE)**

(74) Representative: **Zacco Sweden AB**
**P.O. Box 5581**
**Löjtnantsgatan 21**
**114 85 Stockholm (SE)**

(56) References cited:
**US-A1- 2004 111 311     US-A1- 2013 111 488
US-A1- 2018 260 314**

**Description**

Technical field

The present disclosure relates generally to a method and a technician allocating system for the allocating of a field technician for executing a new received work order on equipment in a communication network.

Background

Communication networks of today, such as wireless networks, are typically very complex and contain many different nodes, elements and components, herein generally referred to as "equipment", which are used to provide various communication services for users and subscribers and also for monitoring and surveillance of the network and its performance. Due to the complexity and many parts of such a communication network, various problems and issues are bound to occur in the network from time to time which often require some appropriate action by a field technician, e.g. on site, to remedy or repair the problem or issue. A problem in the network may involve faulty equipment, which may include both software equipment and hardware equipment, that needs to be attended to, such as repaired, restored, replaced or upgraded, in order to eliminate or at least somehow address the problem.

When such a problem or issue is detected in a communication network, a work order is generated to address the problem and it is necessary to allocate a hopefully competent person to execute the work order, often locally on site where the cause for the problem or issue is known or assumed to be located. Such a person is commonly referred to as a field technician which term will be used in this description. The work order may comprise one or more specific tasks which effectively define the work order and there are typically a plurality of field technicians available for execution of various work orders in the network.

However, the allocation of a suitable field technician may not be optimal and it typically requires a certain amount of manual actions which must be made to obtain information about suitability of a number of candidate field technicians. A field technician is then selected to execute the work order based on whatever information that could be obtained, although without being confident as to whether the selected person is really able to execute the work order successfully. In practice, field technicians are typically selected by a person purely based on availability without consideration of their skills.

US 2013/111488 A1 discloses task assignment using ranking support vector machines.

US 2018/260314 A1 discloses generating a suggested application testing schedule.

US 2004/111311 A1 discloses dispatching work orders for the repair of a telecommunications system.

Summary

It is an object of embodiments described herein to address at least some of the problems and issues outlined above. It is possible to achieve this object and others by using a method and a technician allocating system as defined in the attached independent claims.

According to one aspect, a method, which may be performed by a technician allocating system which operates in a telecommunication network, is provided for allocating a field technician (FT). The technician allocation system identifies features $f_1 \dots f_n$ of a received new work order (WO) to be executed on equipment in the telecommunication network. The technician allocation system obtains similarity scores for the identified features $f_1 \dots f_n$, wherein the similarity scores are related to how similar the new WO is to previously executed old WOs with respect to the identified features, the old WOs having at least one of the features $f_1 \dots f_n$. The technician allocation system also obtains for a set of FT candidates, a FT experience score for each FT candidate with respect to the identified features $f_1 \dots f_n$. The technician allocation system then matches the FT candidates with the features $f_1 \dots f_n$ for the new WO based on the obtained FT experience scores and the similarity scores and allocates at least one of the FTs for executing the new WO on said equipment, based on the matching.

According to another aspect, a technician allocating system is arranged to allocate a FT. The technician allocation system operates in a telecommunication network. The technician allocation system is configured to:

- Identify features $f_1 \dots f_n$ of a received new WO, to be executed on equipment in the telecommunication network.
- Obtain similarity scores for the identified features $f_1 \dots f_n$, wherein the similarity scores are related to how similar the new WO is to previously executed old WOs with respect to the identified features, the old WOs having at least one of the features $f_1 \dots f_n$.
- Obtain for a set of FT candidates, a FT experience score for each FT candidate with respect to the identified features $f_1 \dots f_n$.
- Match the FT candidates with the features $f_1 \dots f_n$ for the new WO based on the obtained FT experience scores and the similarity scores.
- Allocate at least one of the FTs for executing the new WO on said equipment, based on the matching.

A computer program is also provided comprising instructions which, when executed on at least one processor in the above technician allocating system, cause the at least one processor to carry out the method described above. A carrier is also provided which contains the above computer program, wherein the carrier is one of an electronic signal, an optical signal, a radio signal, or a computer readable storage medium.

The above method and technician allocating system may be configured and implemented according to different optional embodiments to accomplish further features and benefits, to be described below.

As the allocation is largely automated to decrease human involvement, a more accurate and efficient allocation procedure is provided which may avoid inadequate visits to equipment sites.

Another advantage of embodiments herein is that FT novices may be identified and trained more efficiently and build expertise on dispatch needs.

Another advantage of embodiments herein is that expert groups for cross-region/ disaster assistance may be quickly assembled. Sometimes very special skills or special-trained FTs are needed to deal in disastrous situations, such as fixing a site that is damaged by an earth quake. It is hard to manually find a FT for a network operations center (NOC). Embodiments herein will make it easier. Another advantage of embodiments herein is that a skill database from both individual and regional perspective is continuously updated/optimized.

Another advantage of embodiments herein is the improved managing knowledge concerning local field service operation (FSO) specialty (fault concerning local climate, traffic routine and etc.).

Brief description of drawings

The solution will now be described in more detail by means of exemplary embodiments and with reference to the accompanying drawings, in which:

Fig. 1 illustrates a communication scenario where a procedure for allocating a field technician is employed, according to some example embodiments.

Fig. 2 is a flow chart illustrating a procedure that may be performed by a technician allocation system, according to further example embodiments.

Fig. 3 is a flow chart showing an example of how a field technician experience score may be obtained, according to further example embodiments.

Fig. 4 is a schematic block diagram illustrating hierarchical clustering of working orders according to further example embodiments.

Fig. 5 is a schematic block diagram illustrating how field technicians are linked to executed work orders according to further example embodiments.

Fig. 6 is a block diagram illustrating how a technician allocating system may be structured, according to further example embodiments.

Detailed description

Embodiments herein are based on the insight that by using a technician allocating system that operates based on previously recorded pairs of WOs and FTs, the system may learn, for example, how much time it took to solve a particular WO and which FT profile that was used to solve it. This type of information can be accessed from a database or the like, as a basis for FT allocations. The technician allocating system may then propose future FT allocations and thereby assist the dispatch center, such as the network operations center, in allocating the most suitable field technician to execute a specific work order.

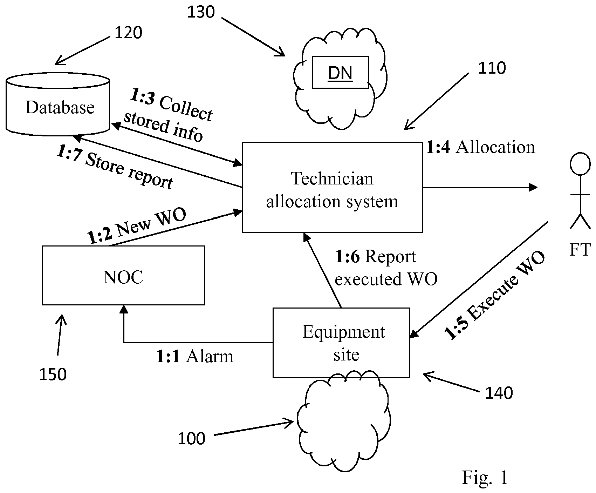

With reference to **Fig. 1,** a communication scenario is shown where a procedure for allocating a FT is employed, according to some example embodiments. When a problem or issue is detected in an equipment site 140 in a telecommunication network 100, an alarm is generated and sent from the equipment site 140 to a network operations center (NOC) 150, **action 1:1.** The NOC 150 then issues a WO, herein denoted "new WO", to the technician allocating system 110 basically as a request to allocate a suitable FT to solve the problem, **action 1:2.** The new WO may contain information about the problem or issue to be solved and also some background information, which background information may include e.g. which location the problem is detected at or which equipment that is needed to solve the problem. Each of these types of information corresponds to an identified feature of the WO.

The technician allocation system 110 then collects stored information from a database 120, which may include information about previous executed WOs, herein denoted "old WOs", and information about the expertise of a set of candidate FTs, **action 1:3.** This information may be stored in the form of a tree structure in the database 120, to be described further below. The stored information may be used to obtain similarity scores of the identified features of the new WO. The similarity scores are related to how similar the new WO is to previously executed old WOs with respect to the identified features, the old WOs having at least one of the features that were identified in the new WO. Such a similarity score may thus be obtained for each relevant old WO in comparison with the new WO.

The stored information in the database 120 may also be used to obtain, for a set of FT candidates, a FT experience score for each FT candidate with respect to the identified features of the WO. The FT experience scores are dependent on the number of times the respective FT candidate has executed an old WO having at least one of the features of the WO. The similarity scores and the FT experience scores are then used to match the FT candidates to the new WO.

At least one of the FT candidates is then allocated for executing the WO, **action 1:4.** The allocated FT is then accordingly dispatched to execute the WO at the equipment site 140 where the problem was detected, **action 1:5.** After the FT has executed the WO, the FT provides details of the work of the executed WO and reports this to the technician allocation system 110, **action 1:6,** which stores the information of the executed WO in the database 120, action 1:7. The procedure for allocating a FT will be further described below.

By storing information of the FTs expertise/features in the database 120 when a WO has been executed, the FTs may be linked to specific relevant types of WOs. And based on this information the most suitable FT can be automatically allocated by the technician allocation system 110 without the need for any manual involvement.

Example embodiments of a method for allocating a FT will now be described and explained in terms of functionality in a technician allocation system 110 which operates in a telecommunication network 100.

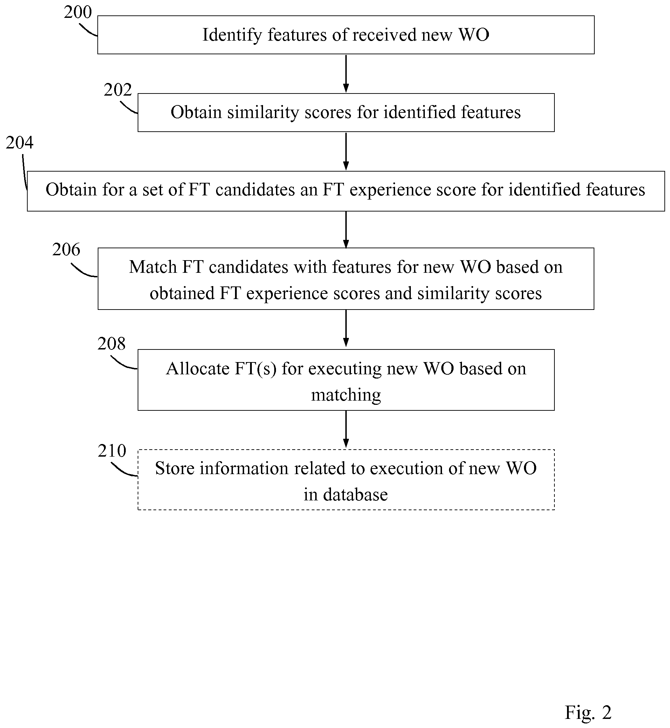

An example of how the method may be employed in terms of actions performed by the technician allocation system 110 is illustrated by the flow chart in Fig. 2 which will now be described with further reference to Fig. 1, although this procedure is not limited to the example of Fig. 1. The actions in Fig. 2 may be taken in any suitable order. Fig. 2 thus illustrates a procedure in the technician allocation system 110 for allocating a FT. Some optional example embodiments that could be used in this procedure will also be described. Actions that are optional are presented in dashed boxes.

A first **action 200** illustrates that the technician allocation system 110 identifies features $f_1 \ldots f_n$ of a received new work order (WO) to be executed on equipment in the telecommunication network 100. Equipment may be both software equipment and hardware equipment such as different nodes, elements and components, etc. used in the telecommunication network 100.

In another **action 202,** the technician allocation system 110 further obtains a similarity score for the identified features $f_1 \ldots f_n$, e.g. from a database 120, wherein the similarity score is related to how similar the new WO is to previously executed old WOs with respect to the identified features, the old WOs having at least one of the features $f_1 \ldots f_n$. Action 202 corresponds to **action 1:3** of Fig. 1.

The technician allocation system 110 may further obtain for a set of FT candidates, an FT experience score for the identified features $f_1 \ldots f_n$, e.g. from the database 120, as shown in **action 204** likewise corresponding to **action 1:3.**

In another **action 206,** the technician allocation system 110 matches the FT candidates with the features $f_1 \ldots f_n$ for the new WO based on the obtained FT experience scores and the similarity scores.

In a further **action 208,** the technician allocation system 110 allocates at least one of the FT candidates for executing the new WO on said equipment, based on the matching, as also shown in **action 1:4** of Fig. 1.

In one example embodiment, another **action 210** illustrates that, after execution of the new WO by the at least one allocated FT, the technician allocating system 110 may store information related to said execution in a database 120 as a basis for updating a FT experience score of the at least one allocated FT, as also shown in **action 1:7** of Fig. 1.

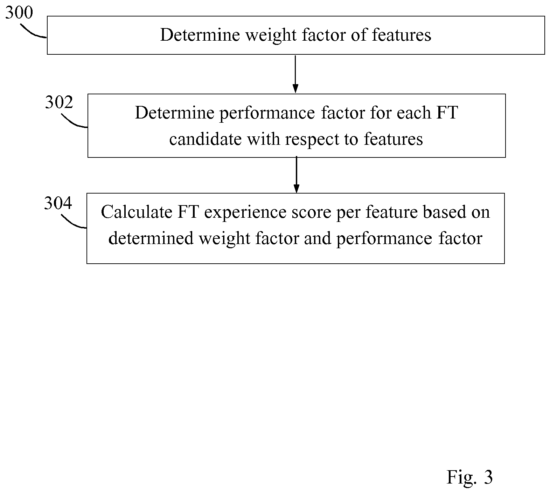

An example of how action 204 could be performed will now be described in more detail with reference to the flow chart in **Fig. 3** and with further reference to Fig. 1, although this procedure is likewise not limited to the example of Fig. 1.

In one example embodiment, illustrated by **action 300,** when obtaining the FT experience score the technician allocating system 110 may determine a weight factor of the features $f_1 \ldots f_n$ indicating the number of times the FT has executed the old WO.

In another example embodiment, illustrated by **action 302,** when obtaining the FT experience score the technician allocating system 110 may further determine a performance factor for each FT candidate with respect to the features $f_1 \ldots f_n$, wherein the performance factor is related to a result when the old WO was executed by the FT, as also shown in **action 1:3** of Fig. 1

In one example embodiment, **action 304,** when obtaining the FT experience score the technician allocating system 110 may eventually calculate the FT experience score per feature based on the determined weight factor and performance factor, as also shown in **action 1:3** of Fig. 1.

As an alternative, a Distributed Node DN and functionality, e.g. comprised in a cloud 130 as shown in Figure 1 may be used for performing or partly performing the various actions described herein.

An advantage of a cloud implementation of embodiments herein is that data may easily be shared between different technician allocating systems by accessing the cloud.

An advantage with the embodiments herein is that as the technician allocation system is automated, the most suitable FT in a particular situation may be allocated. This automation brings benefits of best possible solutions in less time and effort.

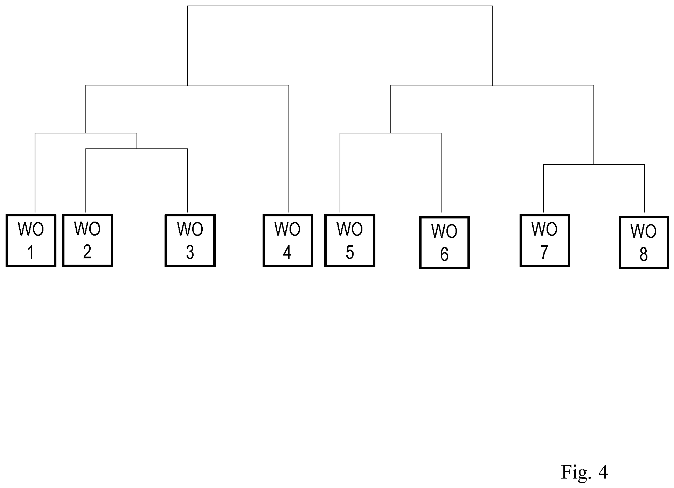

A schematic block diagram illustrating hierarchical clustering of WOs according to further example embodiments is illustrated in Fig. 4. A WO is usually rich in information about the problem to be solved and its context and conditions. Most of this information is typically indicated in the alarm description, e.g. as of action 1:1. The problem description may contain certain keywords that indicate the type of problem. The contextual information may contain the location, type of node to be serviced and indicate equipment needed for the executing the WO. Each type of information is a feature of the WO. The set of features of a WO may constitute its individual profile.

When a FT has executed a WO, the FT provides some details of the work that has been performed. These details of the work may include: the FSO result, time consumed in executing the WO, used tools such as (Site Master, 4x4 cars, climbing equipment, FSO Tool start kit), product vendor, site manager, accessibility, SLA status, etc. Furthermore, this information may be added to the feature set of the WO.

All historical work orders may be organized in a tree structure as shown in Fig. 4, and hierarchical clustering, e.g. Bisecting K-means (BK-means), may be used. BK-means when used herein is a hierarchical clustering algorithm that applies a top-down clustering procedure. If efficiency is more preferred than accuracy, BK-means has the advantage of being able to perform early-stops to build a non-complete tree and consider non-separated WOs within an arbitrary leaf as a single WO to conduct the calculation to save time. The tree structure mentioned herein could also be referred to as a tree graph or just tree for short, and these terms are used interchangeably herein. The tree may be built based on the features from the alarm description. The clustering may be cut from any level on the tree, e.g. from the bottom level which means that one node with one WO forms one cluster. However, any number of WOs may form and be comprised in a cluster. A new WO is allocated to a position in the tree next to the WO that is most similar with respect to its features.

In one embodiment, a tree structure may be created for every feature separately. This means we have as many trees for classifying WOs as we have features defined. In the following, the use of one tree per feature will be discussed.

In another embodiment it is also possible to have only one overall tree for all possible features. In this case a similarity score over all features may be calculated and the tree may be built based on this similarity score.

In a tree, two similar work orders are close neighbors. This may be technically expressed by a metric based on the tree graph.

When using one tree per feature, i.e. single-feature tree, and when using one overall tree for multiple possible features, i.e. multi-feature tree, the similarity metric may then be defined as the height that should be traveled in the vertical direction between two work orders via the shortest path:

$S(w, f)$ = The height to go through the feature graph of $f$ from the current WO ($w_0$) to reach an arbitrary WO $w$.

Another possible metric of similarity may be the number of upward steps needed to take until a common branching point is reached.

New WOs are first classified by analyzing their features as indicated in the WO description and contextual information. With this information a location in the tree may be assigned to it and this means a similarity metric to each historical work order is available.

FT profiles inherit the features from the WO that the technician has executed. This means for example that if a FT has serviced a model of radio base station, the FT is skilled in that model. If certain equipment was used, the FT is then considered to be competent with this equipment. If the service was executed in a certain location, the FT is available in this location or region. All these skills could be indicated in FT profiles.

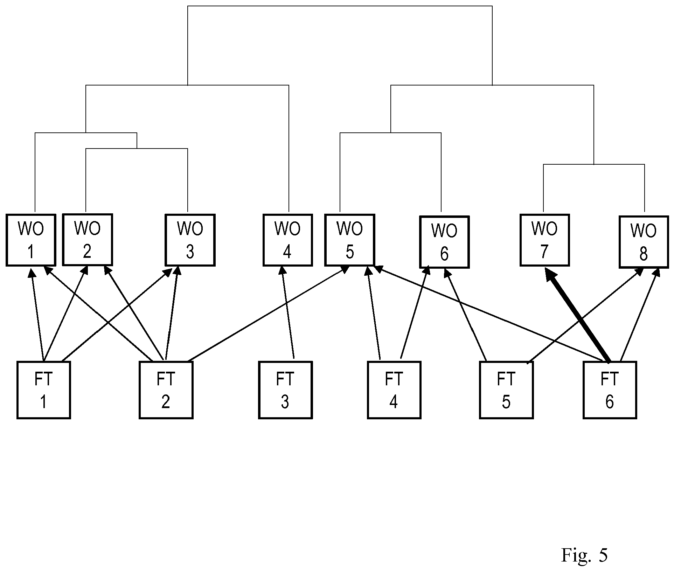

The FT profile of an individual FT may be linked to all the work orders the FT has executed. This is shown in **Fig. 5.**

The number of times a feature was worked with or the related skill was demonstrated serves as confidence metric. When using one tree per feature, the number of links from a FT to WOs may correspond to the number of times the FT has worked with that feature. The experience score of the FT with respect to a feature f is defined as:

$E(f)$ = The number of links to WOs with feature $f$.

In a further embodiment, the success and performance of a FT may also be included when calculating the experience score. The success and performance of a FT with a WO may for example be a score number assigned to all links between the FT profile and the features of that WO. The experience score of feature $f$ may be defined as:

$$E(f) = \sum_{all\ WO\ links} W_f \times P_f$$

Where $W_f$ is the weight for feature $f$ of an individual link between a WO and a profile of a FT, and $P_f$ is the performance measurement of the corresponding WO, including the degree of completion.

As described above, Fig. 1 illustrates an overview of a procedure for allocating a FT, which procedure will now be further described with reference to various examples. A technician allocating system is provided that allocates a FT to solve a new WO. The FT with the best matched competence with the needs of the new WO may be allocated.

The technician allocation system analyses the new WO with respect to its feature set. The new WO may be assigned to clusters in the feature trees. A similarity score $S(w,f)$ for the new WO with respect to a historical WO w, i.e. an old WO, may be calculated per feature. This will lead to a list per feature of similar historical WOs sorted by similarity.

There are FTs linked to each historical WO. The technician allocating system ranks FTs with respect to their experience and success with similar WOs. It assigns a matching score to each FT and may propose to allocate the FT with the highest score, of the FTs that are available.

The matching score M(f) per feature is calculated from the similarity score $S(w,f)$ and the experience/success score $E(f)$,

$$M(f) = \sum_{historical\ work\ orders\ w} S(w,f) \times E(f)$$

In general, the matching score would be calculated over all historical WOs, but it is reasonable and more efficient to only use the most similar ones in this calculation. A reasonable number would be the 100 most similar historical WOs.

So far, the matching is done per feature. This means that for every feature, a best FT would be allocated. In a last step the technician allocating system will choose at least one FT. There are a number of different ways to do that:

a) Choose the field technician having the highest matching scores in most features.

b) Choose the field technician with the highest average matching score *AM:*

$$AM = \frac{\sum_{all\ features\ f} M(f)}{Number\ of\ features}$$

c) Choose the field technician with the highest weighted average matching score *AM*. A weight is introduced that expresses the importance *I(f)* per feature,

$$AM = \frac{\sum_{all\ features\ f} M(f) \times I(f)}{Number\ of\ features}$$

If the first choice FT is not available, the technician allocating system may then allocate the next best match and continue to do that until an available FT is found.

The technician allocating system may prefer the most experienced technicians. This is not always ideal, because less experienced technicians might need training and need to be preferred even if they are not the best match.

What they need to be trained on may be indicated as a subset of features. A bias vector or a bias function *B(f)* may also be introduced, which allows to set an additional weight per feature f. The bias vector or function *B(f)* may be used in the calculation of the overall average matching score *AM* as additional weight:

$$AM = \frac{\sum_{all\ features\ f} M(f) \times I(f) \times B(f)}{Number\ of\ features}$$

The bias vector/function is personal for each FT. It may be changed over time to change the focus areas for a FT.

This Bias vector/function may be used for other purposes besides training. It may for example emphasis a geographical location.

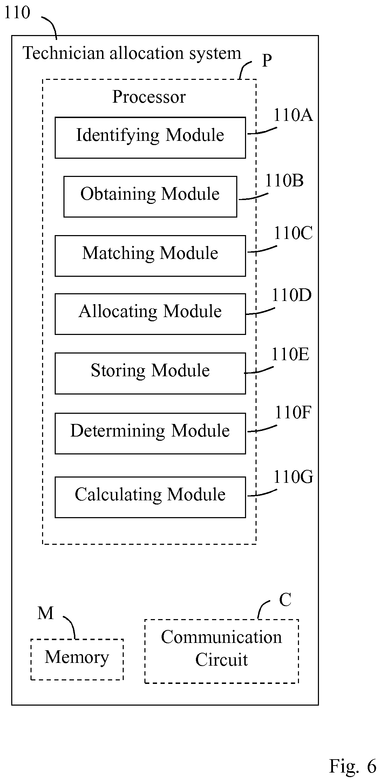

The block diagram in **Fig. 6** illustrates a detailed but non-limiting example of how a technician allocating system 110 may be structured to bring about the above described solution and embodiments thereof. In this figure, the technician allocating system 110 may be configured to operate according to any of the examples and embodiments of employing the solution as described herein, where appropriate. The technician allocating system 110 is shown to comprise a processor "P", a memory "M" and a communication circuit "C" with suitable equipment for transmitting and receiving information and messages in the manner described herein.

The communication circuit C in the technician allocating system 110 thus comprises equipment configured for communication using a suitable protocol for the communication depending on the implementation. The solution is however not limited to any specific types of messages or protocols.

The technician allocating system 110 is, e.g. by means of units, modules or the like, configured or arranged to perform at least some of the actions of the flow chart in Fig. 2 as follows.

The technician allocating system 110 is arranged to allocate a FT which technician allocation system 110 operates in a telecommunication network 100. The technician allocating system 110 is configured to identify features $f_1$ ... $f_n$ of a received new WO to be executed on equipment in the telecommunication network 100. This operation may be performed by an **identifying module 110A** in the technician allocating system 110, as illustrated in action 200.

The technician allocating system 110 is also configured to obtain similarity scores for the identified features $f_1$ ... $f_n$, wherein the similarity scores are related to how similar the new WO is to previously executed old WOs with respect to the identified features, the old WOs having at least one of the features $f_1$ ... $f_n$. This operation may be performed by an **obtaining module 110B,** as illustrated in action 202.

The technician allocating system 110 is further configured to obtain for a set of FT candidates, an FT experience score for each FT candidate with respect to the identified features $f_1$ ... $f_n$. This operation may be performed by an **obtaining module 110B** in the technician allocating system 110, as illustrated in action 204.

The technician allocating system 110 is also configured to match the FT candidates with the features $f_1$ ... $f_n$ for the new WO based on the obtained FT experience scores and the similarity scores. This operation may be performed by a **matching module 110C,** as illustrated in action 206.

The technician allocating system 110 is also configured to allocate at least one of the FTs for executing the new WO on said equipment, based on the matching. This operation may be performed by an **allocating module 110D,** as illustrated in action 208.

The technician allocating system 110 is further configured to after execution of the new WO by the at least one allocated FT, store information related to said execution in a database 120 as a basis for updating the FT experience score of the at least one allocated FT. This operation may be performed by a **storing module 110E,** as illustrated in action 208.

The technician allocating system 110 is further configured to when obtaining the FT experience score determine a weight factor of the features $f_1$ ... $f_n$ indicating the number of times the FT has executed the old WO. This operation may be performed by a **determining module 110F,** as illustrated in action 300.

The technician allocating system 110 is further configured to when obtaining the FT experience score determine a performance factor for each FT candidate with respect to the features $f_1$ ... $f_n$, wherein the performance factor is related to a result when the old WO was executed by the FT. This operation may be performed by the **determining module 110F,** as illustrated in action 302.

The technician allocating system 110 is further configured to when obtaining the FT experience score calculate the FT experience score per feature based on the determined weight factor and performance factor. This operation may be performed by a **calculating module 110G,** as illustrated in action 304.

It should be noted that Fig. 6 illustrates various functional modules in the technician allocating system 110 and the skilled person is able to implement these functional modules in practice using suitable software and hardware equipment. Thus, the solution is generally not limited to the shown structure of the technician allocating system 110, and the functional modules therein may be configured to operate according to any of the features, examples and embodiments described in this disclosure, where appropriate.

The functional modules 110A-G described above may be implemented in the technician allocating system 110 by means of program modules of a computer program comprising code means which, when run by the processor P causes the technician allocating system 110 to perform the above-described actions and procedures. The processor P may comprise a single Central Processing Unit (CPU), or could comprise two or more processing units. For example, the processor P may include a general purpose microprocessor, an instruction set processor and/or related chips sets and/or a special purpose microprocessor such as an Application Specific Integrated Circuit (ASIC). The processor P may also comprise a storage for caching purposes.

The computer program may be carried by a computer program product in the technician allocating system 110 in the form of a memory having a computer readable medium and being connected to the processor P. The computer program product or memory M in the technician allocating system 110 thus comprises a computer readable medium on which the computer program is stored e.g. in the form of computer program modules or the like. For example, the memory M may be a flash memory, a Random-Access Memory (RAM), a Read-Only Memory (ROM) or an Electrically Erasable Programmable ROM (EEPROM), and the program modules could in alternative embodiments be distributed on different computer program products in the form of memories within the technician allocating system 110.

The solution described herein may be implemented in the technician allocating system 110 by a computer program comprising instructions which, when executed on at least one processor, cause the at least one processor to carry out the actions according to any of the above embodiments and examples, where appropriate. The solution may also be implemented at the technician allocating system 110 in a carrier containing the above computer program, wherein the carrier is one of an electronic signal, optical signal, radio signal, or computer readable storage medium.

While the solution has been described with reference to specific exemplifying embodiments, the description is generally only intended to illustrate the inventive concept and should not be taken as limiting the scope of the solution. For example, the terms "technician allocating system", "equipment", "field technician" and "work order" have been used throughout this disclosure, although any other corresponding entities, functions, and/or parameters could also be used having the features and characteristics described here. The solution is defined by the appended claims.

**Claims**

1. A method performed by a technician allocation system (110) for allocating a field technician, FT, which technician allocation system operates in a telecommunication network (100), the method comprising:

   *identifying* (200) features $f_1 ... f_n$ of a received new work order, WO, to be executed on equipment in the telecommunication network (100);
   *obtaining* (202) similarity scores for the identified features $f_1 ... f_n$, wherein the similarity scores are related to how similar the new WO is to previously executed old WOs with respect to the identified features, the old WOs having at least one of the features $f_1 ... f_n$;
   *obtaining* (204) for a set of FT candidates, an FT experience score for each FT candidate with respect to the identified features $f_1 ... f_n$;
   *matching* (206) the FT candidates with the features $f_1 ... f_n$ for the new WO based on the obtained FT experience scores and the similarity scores; and
   *allocating* (208) at least one of the FTs for executing the new WO on said equipment, based on the matching, **characterized in that**
   the matching comprises assigning a matching score per feature of the features $f_1 ... f_n$ and wherein the allocating comprises selecting the FT(s) with the highest weighted average matching score of the features $f_1 ... f_n$.

2. The method according to claim 1, wherein the FT experience scores are dependent on the number of times the respective FT candidate has executed an old WO having at least one of the features $f_1 ... f_n$.

3. The method according to any of the claims 1-2, wherein obtaining the FT experience score comprises:

   *determining* (300) a weight factor of the features $f_1 ... f_n$ indicating the importance of the features $f_1 ... f_n$ in the old WO;
   *determining* (302) a performance factor for each FT candidate with respect to the features $f_1 ... f_n$, wherein the performance factor is related to a result when the old WO was executed by the FT; and
   *calculating* (304) the FT experience score per feature based on the determined weight factor and performance factor.

4. The method according to any of the claims 1-3, wherein the similarity score for the features $f_1 ... f_n$ is obtained by comparing the new WO with old WOs having at least one of the identified features $f_1 ... f_n$ in common.

5. The method according to any of the claims 1-4 further comprises, after execution of the new WO by the at least one allocated FT, *storing* (210) information related to said execution in a work force database (120) as a basis for updating the FT experience score of the at least one allocated FT.

6. The method according to any of the claims 1-5, wherein the allocating comprises selecting the FT(s) with the highest number of matching features $f_1 ... f_n$.

7. A technician allocation system (100) arranged to allocate a field technician, FT, which technician allocation system operates in a telecommunication network (100), the technician allocation system (100) being configured to:

   identify features $f_1 ... f_n$ of a received new work order, WO, to be executed on equipment in the telecommunication network (100);
   obtain similarity scores for the identified features $f_1 ... f_n$, wherein the similarity scores are related to how similar the new WO is to previously executed old WOs with respect to the identified features, the old WOs having at least one of the features $f_1 ... f_n$;

obtain for a set of FT candidates, an FT experience score for each FT candidate with respect to the identified features $f_1 ... f_n$;

match the FT candidates with the features $f_1 ... f_n$ for the new WO based on the obtained FT experience scores and the similarity scores; and

allocate at least one of the FTs for executing the new WO on said equipment, based on the matching, **characterized in that**

the matching comprises assigning a matching score per feature of the features $f_1 ... f_n$ and wherein the allocating comprises selecting the FT(s) with the highest weighted average matching score of the features $f_1 ... f_n$.

8.  The technician allocation system (100) according to claim 7, wherein the FT experience scores are dependent on the number of times the respective FT candidate has executed an old WO having at least one of the features $f_1 ... f_n$.

9.  The technician allocation system (100) according to any of the claims 7-8,
    wherein when obtaining the FT experience score the technician allocation system (100) being configured to comprise:

    determine a weight factor of the features $f_1 ... f_n$ indicating the number of times the FT has worked with at least one of the features $f_1 ... f_n$ in the old WO;

    determine a performance factor for each FT candidate with respect to the features $f_1 ... f_n$, wherein the performance factor is related to a result when the old WO was executed by the FT; and

    calculate the FT experience score per feature based on the determined weight factor and performance factor.

10. The technician allocation system (100) according to any of the claims 7-9,
    wherein the similarity score for the features $f_1 ... f_n$ is obtained by comparing the new WO with old WOs having at least one of the identified features $f_1 ... f_n$ in common.

11. The technician allocation system (100) according to any of the claims 7-10 being adapted to further comprise, after execution of the new WO by the at least one allocated FT, store information related to said execution in a work force database (120) as a basis for updating the FT experience score of the at least one allocated FT.

12. The technician allocation system (100) according to any of the claims 7-11, wherein the allocating comprises selecting the FT(s) with the highest number of matching features $f_1 ... f_n$.

13. A computer program comprising instructions, which when executed by a processor, cause the processor to perform all the steps of a method according to any of the claims 1 to 6.

**Patentansprüche**

1.  Verfahren, das von einem Technikerzuweisungssystem (110) zum Zuweisen eines Außendiensttechnikers, FT, durchgeführt wird, wobei das Technikerzuweisungssystem in einem Telekommunikationsnetzwerk (100) agiert, wobei das Verfahren Folgendes umfasst:

    Identifizieren (200) von Merkmalen $f_1 ... f_n$ eines empfangenen neuen Arbeitsauftrags, WO, der an Ausrüstung in dem Telekommunikationsnetzwerk (100) auszuführen ist;

    Erlangen (202) von Ähnlichkeitsbewertungen für die identifizierten Merkmale $f_1 ... f_n$, wobei die Ähnlichkeitsbewertungen sich darauf beziehen, wie ähnlich der neue WO zuvor ausgeführten alten WOs in Bezug auf die identifizierten Merkmale ist, wobei die alten WOs mindestens eines der Merkmale $f_1 ... f_n$ aufweisen;

    Erlangen (204), für einen Satz FT-Kandidaten, einer FT-Erfahrungsbewertung für jeden FT-Kandidaten in Bezug auf die identifizierten Merkmale $f_1 ... f_n$;

    Abgleichen (206) der FT-Kandidaten mit den Merkmalen $f_1 ... f_n$ für den neuen WO basierend auf den erlangten FT-Erfahrungsbewertung und den Ähnlichkeitsbewertungen; und

    Zuweisen (208) mindestens eines der FTs zum Ausführen des neuen WO an der Ausrüstung, basierend auf dem Abgleichen,

    **dadurch gekennzeichnet, dass**

    das Abgleichen Zuordnen einer Abgleichungsbewertung pro Merkmal der Merkmale $f_1 ... f_n$ umfasst und wobei das Zuweisen Auswählen des/der FT(s) mit der höchsten gewichteten durchschnittlichen Abgleichungsbewertung der Merkmale $f_1 ... f_n$ umfasst.

2. Verfahren nach Anspruch 1, wobei die FT-Erfahrungsbewertungen davon abhängen, wie oft der jeweilige FT-Kandidat einen alten WO, der mindestens eines der Merkmale $f_1 ... f_n$ aufweist, ausgeführt hat.

3. Verfahren nach einem der Ansprüche 1-2, wobei das Erlangen der FT-Erfahrungsbewertung Folgendes umfasst:

Bestimmen (300) eines Gewichtungsfaktors der Merkmale $f_1 ... f_n$, der die Wichtigkeit der Merkmale $f_1 ... f_n$ in dem alten WO anzeigt;
Bestimmen (302) eines Leistungsfaktors für jeden FT-Kandidaten in Bezug auf die Merkmale $f_1 ... f_n$, wobei der Leistungsfaktor in Zusammenhang mit einem Ergebnis, als der alte WO von dem FT ausgeführt wurde, steht; und
Berechnen (304) der FT-Erfahrungsbewertung pro Merkmal basierend auf dem bestimmten Gewichtungsfaktor und dem Leistungsfaktor.

4. Verfahren nach einem der Ansprüche 1-3, wobei die Ähnlichkeitsbewertung für die Merkmale $f_1 ... f_n$ durch Vergleichen des neuen WO mit alten WOs, die mindestens eines der identifizierten Merkmale $f_1 ... f_n$ gemeinsam haben, erlangt wird.

5. Verfahren nach einem der Ansprüche 1-4, ferner umfassend, nach Ausführung des neuen WO durch den mindestens einen zugewiesenen FT, Speichern (210) von Informationen bezüglich der Ausführung in einer Belegschaftsdatenbank (120) als Basis für Aktualisieren der FT-Erfahrungsbewertung des mindestens einen zugewiesenen FT.

6. Verfahren nach einem der Ansprüche 1-5, wobei das Zuweisen Auswählen des/der FT(s) mit der höchsten Anzahl an übereinstimmenden Merkmalen $f_1 ... f_n$ umfasst.

7. Technikerzuweisungssystem (110), das dazu angeordnet ist, einen Außendiensttechniker, FT, zuzuweisen, wobei das Technikerzuweisungssystem in einem Telekommunikationsnetzwerk (100) agiert und das Technikerzuweisungssystem (110) zu Folgendem konfiguriert ist:

Identifizieren von Merkmalen $f_1 ... f_n$ eines empfangenen neuen Arbeitsauftrags, WO, der an Ausrüstung in dem Telekommunikationsnetzwerk (100) auszuführen ist;
Erlangen von Ähnlichkeitsbewertungen für die identifizierten Merkmale $f_1 ... f_n$, wobei die Ähnlichkeitsbewertungen sich darauf beziehen, wie ähnlich der neue WO zuvor ausgeführten alten WOs in Bezug auf die identifizierten Merkmale ist, wobei die alten WOs mindestens eines der Merkmale $f_1 ... f_n$ aufweisen;
Erlangen, für einen Satz FT-Kandidaten, einer FT-Erfahrungsbewertung für jeden FT-Kandidaten in Bezug auf die identifizierten Merkmale $f_1 ... f_n$;
Abgleichen der FT-Kandidaten mit den Merkmalen $f_1 ... f_n$ für den neuen WO basierend auf den erlangten FT-Erfahrungsbewertungen und den Ähnlichkeitsbewertungen; und
Zuweisen mindestens eines der FTs zum Ausführen des neuen WO an der Ausrüstung, basierend auf dem Abgleichen,
**dadurch gekennzeichnet, dass**
das Abgleichen Zuordnen einer Abgleichungsbewertung pro Merkmal der Merkmale $f_1 ... f_n$ umfasst und wobei das Zuweisen Auswählen des/der FT(s) mit der höchsten gewichteten durchschnittlichen Abgleichungsbewertung der Merkmale $f_1 ... f_n$ umfasst.

8. Technikerzuweisungssystem (110) nach Anspruch 7, wobei die FT-Erfahrungsbewertungen davon abhängen, wie oft der jeweilige FT-Kandidat einen alten WO, der mindestens eines der Merkmale $f_1 ... f_n$ aufweist, ausgeführt hat.

9. Technikerzuweisungssystem (110) nach einem der Ansprüche 7-8, wobei das Technikerzuweisungssystem (110), wenn es die FT-Erfahrungsbewertung erlangt, dazu konfiguriert ist, Folgendes zu umfassen:

Bestimmen eines Gewichtungsfaktors der Merkmale $f_1 ... f_n$, der anzeigt, wie oft der FT mit mindestens einem der Merkmale $f_1 ... f_n$ in dem alten WO gearbeitet hat;
Bestimmen eines Leistungsfaktors für jeden FT-Kandidaten in Bezug auf die Merkmale $f_1 ... f_n$, wobei der Leistungsfaktor in Zusammenhang mit einem Ergebnis, als der alte WO von dem FT ausgeführt wurde, steht; und
Berechnen der FT-Erfahrungsbewertung pro Merkmal basierend auf dem bestimmten Gewichtungsfaktor und dem Leistungsfaktor.

10. Technikerzuweisungssystem (110) nach einem der Ansprüche 7-9, wobei die Ähnlichkeitsbewertung für die Merkmale $f_1 ... f_n$ durch Vergleichen des neuen WO mit alten WOs, die mindestens eines der identifizierten Merkmale $f_1 ... f_n$

gemeinsam haben, erlangt wird.

11. Technikerzuweisungssystem (110) nach einem der Ansprüche 7-10, das dazu angepasst ist, nach Ausführung des neuen WO durch den mindestens einen zugewiesenen FT, Speichern von Informationen bezüglich der Ausführung in einer Belegschaftsdatenbank (120) als Basis für Aktualisieren der FT-Erfahrungsbewertung des mindestens einen zugewiesenen FT zu umfassen.

12. Technikerzuweisungssystem (110) nach einem der Ansprüche 7-11, wobei das Zuweisen Auswählen des/der FT(s) mit der höchsten Anzahl an übereinstimmenden Merkmalen $f_1 \ldots f_n$ umfasst.

13. Computerprogramm, umfassend Anweisungen, die, wenn sie von einem Prozessor ausgeführt werden, den Prozessor veranlassen, alle Schritte eines Verfahrens nach einem der Ansprüche 1-6 durchzuführen.

**Revendications**

1. Procédé mis en oeuvre par un système d'affectation de technicien (110) permettant d'affecter un technicien de terrain, FT, lequel système d'affectation de technicien fonctionne dans un réseau de télécommunication (100), le procédé comprenant :

l'identification (200) de caractéristiques $f_1 \ldots f_n$, d'un nouvel ordre de travail reçu, WO, à exécuter sur un équipement dans le réseau de télécommunication (100) ;
l'obtention (202) de scores de similarité pour les caractéristiques identifiées $f_1 \ldots f_n$, les scores de similarité étant liés à la similarité du nouveau WO avec d'anciens WO précédemment exécutés par rapport aux caractéristiques identifiées, les anciens WO ayant au moins l'une des caractéristiques $f_1 \ldots f_n$ ;
l'obtention (204) pour un ensemble de candidats FT, d'un score d'expérience FT pour chaque candidat FT par rapport aux caractéristiques identifiées $f_1 \ldots f_n$ ;
la correspondance (206) des candidats FT avec les caractéristiques $f_1 \ldots f_n$, pour le nouveau WO sur la base des scores d'expérience FT obtenus et des scores de similarité ; et
l'affectation (208) d'au moins l'un des FT pour exécuter le nouveau WO sur ledit équipement, sur la base de la correspondance,
**caractérisé en ce que**
la correspondance comprend l'attribution d'un score de correspondance par caractéristique des caractéristiques $f_1 \ldots f_n$, et dans lequel l'affectation comprend la sélection du ou des FT avec le score de correspondance moyen pondéré le plus élevé des caractéristiques $f_1 \ldots f_n$.

2. Procédé selon la revendication 1, dans lequel les scores d'expérience FT dépendent du nombre de fois que le candidat FT respectif a exécuté un ancien WO ayant au moins l'une des caractéristiques $f_1 \ldots f_n$.

3. Procédé selon l'une quelconque des revendications 1 à 2, dans lequel l'obtention du score d'expérience FT comprend :

la détermination (300) d'un facteur de pondération des caractéristiques $f_1 \ldots f_n$, indiquant l'importance des caractéristiques $f_1 \ldots f_n$, dans l'ancien WO ;
la détermination (302) d'un facteur de performance pour chaque candidat FT par rapport aux caractéristiques $f_1 \ldots f_n$, le facteur de performance étant lié à un résultat lorsque l'ancien WO a été exécuté par le FT ; et
le calcul (304) du score d'expérience FT par caractéristique sur la base du facteur de pondération et du facteur de performance déterminés.

4. Procédé selon l'une quelconque des revendications 1 à 3, dans lequel le score de similarité pour les caractéristiques $f_1 \ldots f_n$ est obtenu en comparant le nouveau WO avec d'anciens WO ayant au moins une des caractéristiques identifiées $f_1 \ldots f_n$ en commun.

5. Procédé selon l'une quelconque des revendications 1 à 4 qui comprend en outre, après l'exécution du nouveau WO par l'au moins un FT affecté, le stockage (210) d'informations relatives à ladite exécution dans une base de données de main-d'oeuvre (120) comme base pour la mise à jour du score d'expérience FT de l'au moins un FT affecté.

6. Procédé selon l'une quelconque des revendications 1 à 5, dans lequel l'allocation comprend la sélection du ou des FT avec le plus grand nombre de caractéristiques correspondantes $f_1 \ldots f_n$.

**7.** Système d'affectation de technicien (100) permettant d'affecter un technicien de terrain, FT, lequel système d'affectation de technicien fonctionne dans un réseau de télécommunication (100), le système d'affectation de technicien (100) étant configuré pour :

identifier des caractéristiques $f_1 \ldots f_n$ d'un nouvel ordre de travail reçu, WO, à exécuter sur un équipement dans le réseau de télécommunication (100) ;
obtenir des scores de similarité pour les caractéristiques identifiées $f_1 \ldots f_n$, les scores de similarité étant liés à la similarité du nouveau WO avec d'anciens WO précédemment exécutés par rapport aux caractéristiques identifiées, les anciens WO ayant au moins l'une des caractéristiques $f_1 \ldots f_n$ ;
obtenir pour un ensemble de candidats FT, un score d'expérience FT pour chaque candidat FT par rapport aux caractéristiques identifiées $f_1 \ldots f_n$ ;
faire correspondre les candidats FT avec les caractéristiques $f_1 \ldots f_n$ pour le nouveau WO sur la base des scores d'expérience FT obtenus et des scores de similarité ; et
affecter au moins l'un des FT pour exécuter le nouveau WO sur ledit équipement, sur la base de la correspondance,
**caractérisé en ce que**
la correspondance comprend l'attribution d'un score de correspondance par caractéristique des caractéristiques $f_1 \ldots f_n$, et dans lequel l'attribution comprend la sélection du ou des FT avec le score de correspondance moyen pondéré le plus élevé des caractéristiques $f_1 \ldots f_n$.

**8.** Système d'affectation de technicien (100) selon la revendication 7, dans lequel les scores d'expérience FT dépendent du nombre de fois que le candidat FT respectif a exécuté un ancien WO ayant au moins l'une des caractéristiques $f_1 \ldots f_n$.

**9.** Système d'affectation de technicien (100) selon l'une quelconque des revendications 7 à 8, dans lequel, lors de l'obtention du score d'expérience FT, le système d'affectation de technicien (100) est configuré pour comprendre les étapes consistant à :

déterminer un facteur de pondération des caractéristiques $f_1 \ldots f_n$, indiquant le nombre de fois que le FT a travaillé avec au moins l'une des caractéristiques $f_1 \ldots f_n$, dans l'ancien WO ;
déterminer un facteur de performance pour chaque candidat FT par rapport aux caractéristiques $f_1 \ldots f_n$, le facteur de performance étant lié à un résultat lorsque l'ancien WO a été exécuté par le FT ; et
calculer le score d'expérience FT par caractéristique sur la base du facteur de pondération et du facteur de performance déterminés.

**10.** Système d'affectation de technicien (100) selon l'une quelconque des revendications 7 à 9, dans lequel le score de similarité pour les caractéristiques $f_1 \ldots f_n$, est obtenu en comparant le nouveau WO avec les anciens WO ayant au moins une des caractéristiques identifiées $f_1 \ldots f_n$ en commun.

**11.** Système d'affectation de technicien (100) selon l'une quelconque des revendications 7 à 10 étant adapté pour comprendre en outre, après l'exécution du nouveau WO par l'au moins un FT affecté, le stockage d'informations relatives à ladite exécution dans une base de données de main-d'oeuvre (120) comme base pour mettre à jour le score d'expérience FT de l'au moins un FT affecté.

**12.** Système d'affectation de technicien (100) selon l'une quelconque des revendications 7 à 11, dans lequel l'affectation comprend la sélection du ou des FT avec le plus grand nombre de caractéristiques correspondantes $f_1 \ldots f_n$.

**13.** Programme informatique comprenant des instructions qui, lorsqu'elles sont exécutées par un processeur, amènent le processeur à exécuter toutes les étapes d'un procédé selon l'une quelconque des revendications 1 à 6.

Fig. 1

200 — Identify features of received new WO

202 — Obtain similarity scores for identified features

204 — Obtain for a set of FT candidates an FT experience score for identified features

206 — Match FT candidates with features for new WO based on obtained FT experience scores and similarity scores

208 — Allocate FT(s) for executing new WO based on matching

210 — Store information related to execution of new WO in database

Fig. 2

300 Determine weight factor of features

302 Determine performance factor for each FT candidate with respect to features

304 Calculate FT experience score per feature based on determined weight factor and performance factor

Fig. 3

Fig. 4

Fig. 5

110

Technician allocation system — P

Processor

Identifying Module — 110A

Obtaining Module — 110B

Matching Module — 110C

Allocating Module — 110D

Storing Module — 110E

Determining Module — 110F

Calculating Module — 110G

M

Memory

C

Communication Circuit

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013111488 A1
- US 2018260314 A1
- US 2004111311 A1